(19)

**Europäisches Patentamt**

**European Patent Office**

**Office européen des brevets**

(11) **EP 4 545 939 A1**

(12) **EUROPEAN PATENT APPLICATION**

(43) Date of publication:
**30.04.2025 Bulletin 2025/18**

(21) Application number: **23205862.8**

(22) Date of filing: **25.10.2023**

(51) International Patent Classification (IPC):
**G01N 17/00** *(2006.01)* **G01N 17/02** *(2006.01)*
**G01N 27/26** *(2006.01)*

(52) Cooperative Patent Classification (CPC):
**G01N 17/006; G01N 17/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ABB Schweiz AG**
**5400 Baden (CH)**

(72) Inventors:
- **Pypec, Stefan**
  **31-215 Krakow (PL)**

- **Wawrzola, Grzegorz Piotr**
  **25-319 Kielce (PL)**
- **Michalik, Adam**
  **32-087 Bibice (PL)**
- **Siwek, Artur**
  **31-421 Kraków (PL)**

(74) Representative: **Wroblewski, Marcin Jan**
**Fert, Jakubiak vel Wojtczak**
**Wróblewski rzecznicy patentowi**
**Sp. P. / ul. Gdanska 126/A103**
**90-520 Lodz (PL)**

(54) **AN ATMOSPHERIC CORROSION SENSOR**

(57) The invention reveals an atmospheric corrosion sensor (1) for detecting corrosion of electrical equipment due to corrosive gas comprising at least one atmospheric corrosion sensing structure (2) placed on at least one insulated corrosion sensor substrate (3) wherein said atmospheric corrosion sensor (1) comprises at least one gas permeable layer (4) placed on the corrosion sensing structure (2) wherein said gas permeable layer (4) allows for transferring the molecules of corrosive gases present in the atmosphere to the surface of the sensing structure (2), opposite to insulated corrosion sensor substrate (3), causing it to corrode.

EP 4 545 939 A1

**Description**

**Technical field of the invention**

The object of the invention is an atmospheric corrosion sensor for detecting corrosion of electrical equipment due to corrosive gas. The sensor can be used in various types of electrical equipment which are susceptible to atmospheric corrosion. Especially the sensor is intended for electrical devices which are used in the most aggressive corrosive atmospheres which can be found in power distribution industry, chemical production plants, aircrafts, automotive manufacture, transportation infrastructure, off-shore structures and the construction industry.

**Background art**

Atmospheric corrosion is an electrochemical process of degradation of materials exposed to corrosive atmosphere. The susceptibility of materials to atmospheric corrosion depends on many factors, from which the most important are: type and structure of the material, presence of water, composition of the atmosphere, humidity, ambient temperature. Especially vulnerable to atmospheric corrosion are metals and their alloys, such as copper, aluminium, iron, zinc, nickel, silver, steel, brass and many others. The most aggressive corrosive atmospheres can be found in power distribution industry, chemical production plants, aircraft, automotive manufacture, transportation infrastructure, off-shore structures and the construction industry. These atmospheres are usually rich in many corrosive species, such as for example chlorides, phosphates, nitrates, sulphates, carbonates, sulphur oxides, nitrogen oxides, carbon dioxide, hydrogen sulphide, which together with moisture and oxygen can lead to severe metal corrosion.

Different electronic and electrical equipment is used in each of these environments and, since they consist of various metals and alloys, they are particularly prone to damage due to atmospheric corrosion. Growing complexity and demand on reliability of electronic devices and components make the atmospheric corrosion become an important problem. Therefore, atmospheric corrosion monitoring can help to predict the useful lifetime of electronic and electrical devices in particular environment and to plan service and maintenance actions, in order, to prevent from critical failures and equipment downtimes.

Many corrosion sensors use metal films to detect atmospheric corrosion. Corrosive species in the atmosphere react with the surface of metal causing the corrosion to advance in depth of the film so the metal is consumed, and electrical resistance increases until the continuity is broken. The time needed to break the metal film depends on its thickness and number of environmental conditions, like concentration of corrosive species in the atmosphere, humidity and temperature. The thicker the film, the longer it takes to break the electrical continuity.

In the state of the art, corrosion sensors are known. For example, document US8723534B2 reveals a corrosion sensor comprising a plurality of metal strips having different thicknesses. A first metal strip with the least thickness is first employed to provide sensitive corrosion detection. After an exposed portion of the first metal strip is consumed, a second metal strip having a second least thickness can be employed to provide continued sensitive corrosion detection employing a remaining un-corroded portion of the second metal strip. The plurality of metal strips can be sequentially employed as exposed portions of thinner metal strips become unusable through complete corrosion and un-corroded exposed portions of thicker metal strips become thin enough to provide sensitive corrosion detection.

A patent US8390306B2 discloses an atmospheric corrosion sensor. Its corrosion sensor is based on a metal film resistor. Corrosion sensor comprises a set of multiple metal films, with progressively increasing widths. Metal films are seated on a non-conduction material. The corrosion sensor operates such that the resistance of each metal film is measured. Its resistance depends on its spatial dimensions. Therefore, an atmospheric corrosion influences the metal film spatial dimensions and changes its resistance. The resistance changes due to a reduced conduction path as the width of the metal film is converted from a metal to a nonconductive oxide due to corrosion. As the corrosive gases in the atmospheric environment, in which the sensor operates, attack the metal of the metal film and transform it to a nonconductive oxide, the width is reduced thus increasing the resistance of the metal film. The operation of the corrosion sensor is optimized to work on a relatively low corrosion rate with corrosion product formed at a rate of about 30 nanometers per month or lower. The corrosion sensor is designed to be used in interiors. Hence, when a certain level of corrosion is detected via the sensor response, the atmospheric environment of the interior can be correspondingly regulated. In this solution, also reference sensor element can be used, which are not substantially susceptible to corrosion caused by the atmospheric environment.

A patent application US20230134944A1 reveals a corrosive environment monitoring device, comprising a laminated body including an insulation plate, a base metal thin film, and a sensing metal thin film, the base metal thin film being formed on the insulation plate and being resistant to corrosion by a corrosive substance, the sensing metal thin film being formed on the base metal thin film and being susceptible to corrosion by the corrosive substance. The corrosive environment monitoring further comprises a case containing the laminated body, including an opening portion in a side surface direction, and forming a gas passage for the corrosive substance in the inside, wherein the sensing metal thin film is formed in a partial area on the base metal thin film.

To assess the corrosion rate with electronic equipment, multiple methods are used, however four of them seem to be the most popular.

One of the methods is based on optical assessment of a corrodible surface affected by a corrosion process. It can be based on photoelements such as photodiode and phototransistor. However, these simple solutions are very sensitive to dirt, dust and the light condition (i.e., daylight vs artificial lighting), while more advanced solutions based on picture recognition (a camera and a picture processing unit) are not widely used as size and cost of this solution might be very high, which limits the use only for protection of most important and valuable assets.

Another method is based on electrochemical corrosion measurement, where electrical potential, anodic and cathodic currents of very small value are monitored. This method requires the use of specific electrodes and extremely accurate monitoring circuit, which increases cost and size of the solution.

Yet another method is based on continuous monitoring of some physical parameters of corrosion sensor, made of a corrodible material, to assess progress of corrosion process - for example monitoring of a resistance change of a metal strip. In the continuous method a single metal film of predefined thickness is used, and its electrical resistance is measured so the corrosion progress can be monitored continuously in time. Sometimes another metal film protected from corrosion is also used to compensate against temperature changes and other environmental factors not related directly to corrosion. This method requires a measurement equipment of good quality to detect small changes of parameter values, and is sensitive for environmental condition, such as temperature and humidity. Additionally, to detect trends within the device (when a standalone solution not connected to a more advanced system is used), it might be necessary to store measurement data over time, and to compare them. All these requirements can increase cost of the measurement device able to meet the demanded functionality with reasonable sensitivity. As a result, the total cost of the solutions and its size still might be too high to allow its placement as additional functional block in many products.

The fourth one, called discrete method, is based on detection of the moment when the corrosion process causes breaking of the continuity of the corrosion sensor. The detection circuit is extremely low cost and small size, however the disadvantage of using that solution is limited information about the corrosion progress - it can only indicate reaching a threshold point where the continuity is broken, and it is not possible to provide information about the progress of a corrosion over time.

To enhance the capabilities of fourth solution, it is possible to use multiple sensing elements based on detection of connection loss. However, it is crucial to ensure that they are damaged by the corrosion process at different time, so that information about connection loss in consequent sensing elements can be obtained and basis on the sequence, the corrosion progress of protected equipment might be assessed. The disadvantage of the discrete method is the necessity of using metal films of different thickness, which increases manufacturing cost and limits the choice of available technologies.

Predicting the progress of corrosion of different materials usually requires knowledge on the composition of the corrosive atmosphere. In practice, the corrosion process is not induced by a single corrosive gas but a mixture of many gases which react in different ways with variety of materials. Existing corrosion sensors provide only a collective information on the ongoing corrosion process with respect to a particular material.

The object of the present invention is the provision of a low-cost corrosion sensor providing comprehensive information on the atmospheric corrosion in the operating environment of electrical equipment due to corrosive gas.

## Summary of the invention

The object is achieved with the device according to claim 1.

An atmospheric corrosion sensor for detecting corrosion of electrical equipment due to corrosive gas comprising at least one atmospheric corrosion sensing structure placed on at least one insulated corrosion sensor substrate. Said atmospheric corrosion sensor comprises at least one gas permeable layer placed on the corrosion sensing structure wherein said gas permeable layer allows for transferring the molecules of corrosive gases present in the atmosphere to the surface of the sensing structure, opposite to insulated corrosion sensor substrate, causing it to corrode.

Advantageous embodiments of the device are the subject of the dependent claims or can be found in the following description and the embodiment.

Preferably, the gas permeable layer is a gas-selective layer allowing for transfer of a single corrosive gas or a predefined set of corrosive gases to said atmospheric corrosion sensing structure. Therefore, the atmospheric corrosion rate can be monitored with respect to selected corrosive gases. Gas-selective layers can, for example, be made in the form of gas-selective membranes.

The atmospheric corrosion sensor preferably comprises at least two gas-selective layers located on top of each other wherein the combination of these gas-selective layers, allow for transfer of a single corrosive gas or a predefined set of corrosive gases to said atmospheric corrosion sensing structure.

Another preferred embodiment, said atmospheric corrosion sensor comprises at least two atmospheric corrosion sensing structures, wherein these atmospheric corrosion sensing structures are covered by different gas-selective layers or different combination of gas-selective layers, wherein each gas-selective layer or each combination of gas-selective layers allow for transfer of different corrosive gases or a different predefined set of corrosive gases to said atmospheric corrosion sensing structures. The usage of plurality of such atmospheric corrosion sensing structures with different gas-selective layers or different combination of gas-selective layers not only allow for monitoring of corrosion progress but also for determination of the presence and concentration of selected corrosive gases in the atmosphere.

It is preferably to use in a sensor plurality of such atmospheric corrosion sensing structures of the same spatial dimensions with different gas-selective layers. This enables an easy comparison of the results from plurality of the sensor structures sensitive to different corrosive gases. For example, the corrosion rate for gas x is CRx and for gas y the corrosion rate is CRy. If CRx > CRy it means that the atmosphere is richer in corrosive gas x, which causes intense corrosion of the corrosion sensing structure. This allows to assess that concentration of corrosive gas x in the atmosphere is higher than corrosive gas y.

In yet another preferred embodiment of the invention the atmospheric corrosion sensor comprises at least two atmospheric corrosion sensing structures of the same spatial dimensions, wherein said sensing structures are covered by gas permeable layers, of the same type, having different thickness. Usage of non-corrodible, gas permeable layers of different thickness allow for control the corrosion rate of corrosion sensing structures.

Preferably the atmospheric corrosion sensor comprises at least one reference structure covered with nonpermeable protective layer. Reference structure is made of the same material as atmospheric corrosion sensing structure and have the same spatial dimensions. Reference structure can be used together with a corrosion sensing structure for compensate the influence of temperature and other environmental factors on the measurement.

The atmospheric corrosion sensor preferably comprises a gutter layer located between the corrosion sensing structure and the gas permeable layer. The gutter layer can be used if the gas-selective layer could not be applied directly to the corrosion sensing structure. Gutter layer can, for example, be made of materials with extremely high permeability but low selectivity, such as poly[(1-trimethylsilyl)-1-propyne] (PTMSP) and polydimethylsiloxane (PDMS).

Preferably, the corrosion sensing structure of the atmospheric corrosion sensor is made of corrodible metal or metals alloy, in particular copper, aluminum, iron, zinc, nickel, silver, steel, brass.

Preferably, the corrosion sensing structure of the atmospheric corrosion sensor is made of metal or metals alloy film.

The object of the invention is also a set of said atmospheric corrosion sensors as well as an electrical equipment for corrosion detection comprising at least one of said atmospheric corrosion sensors or at least one set of atmospheric corrosion sensors.

## Advantages of the Invention

Atmospheric corrosion sensors according to the invention provide more comprehensive information on the atmospheric corrosion in the operating environment of a device. They allow for more accurate estimation of its lifetime and more effective maintenance actions planning.

Enabling predictive maintenance by monitoring severity of corrosive environment in which corrosion sensor is operating; this information might be furtherly used to estimate corrosion rate of the assets working in the same environment as the corrosion sensor, and thus allow to predict when it reaches end of operational life due to corrosion process, plan maintenance actions in advance and reduce cost of unplanned service actions due to unexpected failure.

Such information can also be used for selection of protection measures against corrosion and more adequate design of warranty terms.

Furthermore, thanks to the usage of multiple corrosion sensing structures of the same thickness and/or spatial dimensions and control of the corrosion rate with gas permeable layers of different thickness and/or different gas-selective layers allowing for transfer of a single corrosive gas or a predefined set of corrosive gases to said atmospheric corrosion sensing structure allow for providing low-cost corrosion sensors.

## Brief description of drawings

The object of the invention is shown in embodiments in a drawing, in which:

Fig. 1      presents schematically an atmospheric corrosion sensor according to the first embodiment of the invention;

Fig. 2      presents the atmospheric corrosion sensor according to the first embodiment of the invention incorporated in electronic circuits allowing for verification of the electrical continuity of the corrosion sensing structures;

Fig. 3      presents schematically an atmospheric corrosion sensor according to the second embodiment of the invention comprising gas-selective layer transmitting only molecules of a single corrosive gas to a corrosion sensor structure;

Fig. 4 presents schematically an atmospheric corrosion sensor according to the third embodiment of the invention comprising a combination of two layers - first transmitting only gas molecules A and B, and second transmitting only gas molecules A and D;

Fig. 5 presents schematically an atmospheric corrosion sensor according to the fourth embodiment of the invention comprising a series of corrosion sensing structures having the same spatial dimensions covered by different gas-selective layers, each designed for transmission of molecules of a single corrosive gas;

Fig. 6 presents schematically an atmospheric corrosion sensor according to the fifth embodiment of the invention comprising a corrosion sensing structure and a reference structure implemented on a common printed circuit board;

Fig. 7 presents schematically an atmospheric corrosion sensor according to the sixth embodiment of the invention comprising a series of corrosion sensing structures having the same spatial dimensions covered by gas permeable layers of different thickness;

Fig. 8 presents an atmospheric corrosion effect on the electrical resistance of corrosion sensing structures covered with gas permeable layers of different thickness presented in discrete time points;

Fig. 9 presents an oscillator feedback network comprising atmospheric corrosion sensors according the invention;

Fig. 10 presents an example of RC oscillator based on a Schmitt inverter comprising atmospheric corrosion sensor according the invention;

Fig. 11 presents an example output frequency change due to corrosion of corrosion sensing structures of the atmospheric corrosion sensor according to the invetion, incorporated in the RC oscillator based on a Schmitt inverter;

Fig. 12 presents an example of Colpitts oscillator based on a logic inverter comprising atmospheric corrosion sensor according to the invention;

Fig. 13 presents an example output frequency change due to corrosion of corrosion sensing structures of the atmospheric corrosion sensor according to the invetion, incorporated in the Colpitts oscillator based on a logic inverter;

Fig. 14 presents presents an example of LM555 based oscillator with output frequency as a function of the resistance of corrosion sensing structures of the atmospheric corrosion sensor according to the invention connected in parallel with R1;

Fig. 15 presents presents an example of LM555 based oscillator with output frequency as a function of the resistance of corrosion sensing structures of the atmospheric corrosion sensor according to the invention connected in parallel with R2;

Fig. 16 presents an exemple of an electric circuit of current source controlled by resistance of corrosion sensing structure of the atmospheric corrosion sensor according to the invention;

Fig. 17 presents another exemplale of the electric circuit of current source controlled by resistance of corrosion sensing structure of the atmospheric corrosion sensor according to the invention;

Fig. 18 presents a scheme of a measurement system with distributed atmospheric corrosion sensors according to the invention and a common measurement unit;

Fig. 19 presents a scheme of a measurement system with distributed atmospheric corrosion sensors according to the invention and a common measurement unit able to demodulate signals from different sources;

Fig. 20 presents an exemple of an electric circuit of current sink with output current as a function of the resistance of corrosion sensing structures of the atmospheric corrosion sensor according to the invention;

Fig. 21    presents an exemple of an electric circuit of current source with output current as a function of the resistance of corrosion sensing structures of the atmospheric corrosion sensor according to the invention;

Fig. 22    presents an example of narrow band-pass filter with center frequency controlled by the atmospheric corrosion sensor according to the invention;

Fig. 23    presents a measurement circuit for the filter based on corrosion sensor according to the invention;

Fig. 24    presents an example of narrow band-pass filter with very high quality factor and center frequency controlled by corrosive atmospheric corrosion sensor according to the invention;

Fig. 25    presents a scheme of a measurement system with distributed narrow band-pass filters controlled by atmospheric corrosion sensors according to the invention and a common measurement unit;

Fig. 26    presents a narrow band-pass filter with center frequency as a function of the resistance of corrosion sensing structures of the atmospheric corrosion sensor according to the invention;

Fig. 27    presents a narrow band-pass filter with very high quality factor and center frequency as a function of the resistance of corrosion sensing structures of the atmospheric corrosion sensor according to the invention;

**Detailed description of preferred embodiments**

**Embodiment 1**

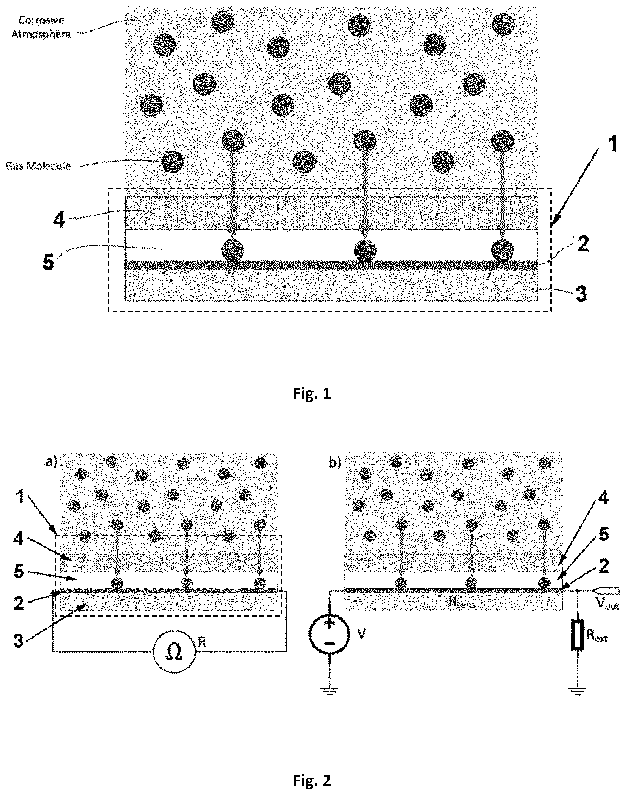

Fig. 1 presents an atmospheric corrosion sensor 1 for detecting corrosion of electrical equipment due to corrosive gas comprising an atmospheric corrosion sensing structure 2 placed on insulated corrosion sensor substrate 3. Said atmospheric corrosion sensor 1 comprises non-corrodible gas permeable layer 4 placed on the corrosion sensing structure 2 wherein said gas permeable layer 4 allows for transferring the molecules of corrosive gases present in the atmosphere to the surface of the sensing structure 2, opposite to insulated corrosion sensor substrate 3, causing it to corrode.

The corrosion sensing structure 2 is in the form of metal film made of corrodible metal or metals alloy, in particular copper, aluminum, iron, zinc, nickel, silver, steel, and brass. However, other structures of the corrosion sensing structure 2 are possible e.g., metal plate.

Gas permeable layer 4 can be e.g., an inorganic, polymer, mixed-matrix or facilitated transport layer.

Atmospheric corrosion sensor 1 comprises also a gutter layer 5 located between the corrosion sensing structure 2 and the gas permeable layer 4. The gutter layer 5 can, for example, be made of materials with extremely high permeability but low selectivity, such as poly[(1-trimethylsilyl)-1-propyne] (PTMSP) and polydimethylsiloxane (PDMS). However, the gutter layer is entirely optional and not essential to the operation of the sensor 1.

Molecules of corrosive gases present in the atmosphere pass through the non-corrodible gas permeable layer 4 and access the surface of the corrosion sensing structure 2. Corrosive gases react with the surface of the corrosion sensing structure 2 causing the corrosion to advance in depth so the material is consumed, and the electrical resistance of the film increases until the continuity is broken.

Corrosion progress of uncovered corrosion sensing structure 2 is quicker than the transport of corrosive molecules through the gas permeable layer 4. Therefore, the corrosion rate of corrosion sensing structure 2 depends on the thickness of the gas permeable layer 4. The thicker the gas permeable layer 4, the slower the transport of the corrosive molecules so the lower the concentration of the molecules at the surface of the corrosion sensing structure 2. Therefore, atmospheric corrosion sensors with different corrosion rates without using metal films of different thicknesses can be provided, decreasing manufacturing costs.

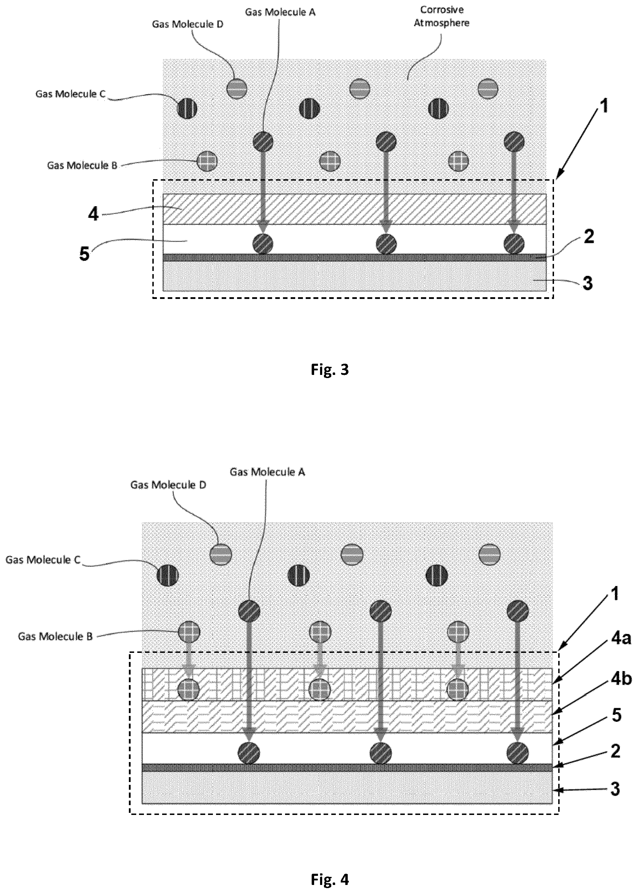

The electrical continuity of the corrosion sensing structure 2 can be verified by either measuring electrical resistance (as shown in Fig, 2a) or by using a simple voltage divider circuit (Figure 3b) which can be connected to a logic device input. The complete resistance measurement is more expensive, but it can provide more information on the progress of corrosion since it allows for continuous measurement of the electrical properties of the sensing film. On the other hand, the simple voltage divider circuit provides only binary information on the state of the sensing film ($V_{out}=V_{HIGH}$ wherein $V_{HIGH}$ represents logic state high (non-corroded film) and, $V_{out}=V_{LQW}$ wherein $V_{LOW}$ represents logic state low - broken film), but it is a very low-cost solution.

**Embodiment 2**

Fig. 3 presents an atmospheric corrosion sensor 1 for detecting corrosion of electrical equipment due to corrosive gas comprising an atmospheric corrosion sensing structure 2 placed on insulated corrosion sensor substrate 3. Said atmospheric corrosion sensor 1 comprises gas permeable layer 4 placed on the corrosion sensing structure 2. Said gas permeable layer 4 is a gas-selective layer allowing for transfer of a single corrosive gas or a predefined set of corrosive gases to the surface of the atmospheric corrosion sensing structure 2, opposite to insulated corrosion sensor substrate 3, causing it to corrode.

The corrosion sensing structure 2 is in the form of metal film made of corrodible metal or metals alloy, in particular copper, aluminum, iron, zinc, nickel, silver, steel, and brass. However, other structures of the corrosion sensing structure 2 are possible e.g., metal plate.

Gas selective layer 4 can be e.g., an inorganic, polymer, mixed-matrix or facilitated transport layer. Examples of gas permeable layers permeable to corrosive $SO_2$, are polymer layers like Pebax® 3533, 6FDA-HAB-DAM, Celulose triacetate (CTA) or Polyacrylate. In turn, for corrosive $NO_x$ gases exemplary gas permeable layers are PSf, Matrimid® 5218, 6FDA-TMPDA, zeolite SSZ-13, PDMS, Fe0.803δ, ZSM-5 zeolite composite PTFE membrane.

The atmospheric corrosion sensor 1 comprises also a gutter layer 5 located between the corrosion sensing structure 2 and the gas permeable layer 4. The gutter layer 5 can, for example, be made of materials with extremely high permeability but low selectivity, such as poly[(1-trimethylsilyl)-1-propyne] (PTMSP) and polydimethylsiloxane (PDMS). However, the gutter layer is entirely optional and not essential to the operation of the sensor 1.

The gas-selective layer transmits molecules of single corrosive gas or a predefined set of corrosive gases from the atmosphere to the surface corrosion sensing structure 2 and reduces transmission of molecules of other gases. Therefore, atmospheric corrosion sensors measuring the corrosion rates for specific gases or sets of corrosive gases are provided. It allows not only to measure the corrosion rate with respect to the concentration of different corrosive gases but also to quantify the corrosivity and composition of the atmosphere.

The electrical continuity of the corrosion sensing structure 2 can be verified by the same electrical circuits as described in embodiment 1. The output signal from the corrosion sensor, e.g., voltage or current, changes with the progress of corrosion of the corrosion sensing structure 2 due to a reaction with a particular gas, and the corrosion rate can be estimated.

**Embodiment 3**

Fig. 4 illustrates a third embodiment of the atmospheric corrosion sensor corresponding to the second embodiment which is, however, different as the atmospheric corrosion sensor 1 comprises two gas-selective layers 4 located on top of each other. A gas-selective layer 4a is permeable to gas molecules A and B, and a gas-selective layer 4b is permeable to gas molecules A and D. Therefore, only gas molecules A can access the corrosion sensing structure.

Such two gas-selective layers 4 can, for example, have a form of bilayer membrane, like e.g., COF-LZU1-ACOF-1 membrane (Covalent Organic Framework-Covalent Organic Framework Bilayer Membranes for Highly Selective Gas Separation Hongwei Fan, Alexander Mundstock, Armin Feldhoff, Alexander Knebel, Jiahui Gu, Hong Meng, and Jürgen Caro; Journal of the American Chemical Society 2018 140 (32), 10094-10098I DOI: 10.1021/jacs.8b0513).

Such a combination of gas-selective layers 4 allows for transfer of a single corrosive gas or a predefined set of corrosive gases to said atmospheric corrosion sensing structure 2 if the specific gas-selective layers is not available or is much more expensive than the set of layers.

**Embodiment 4**

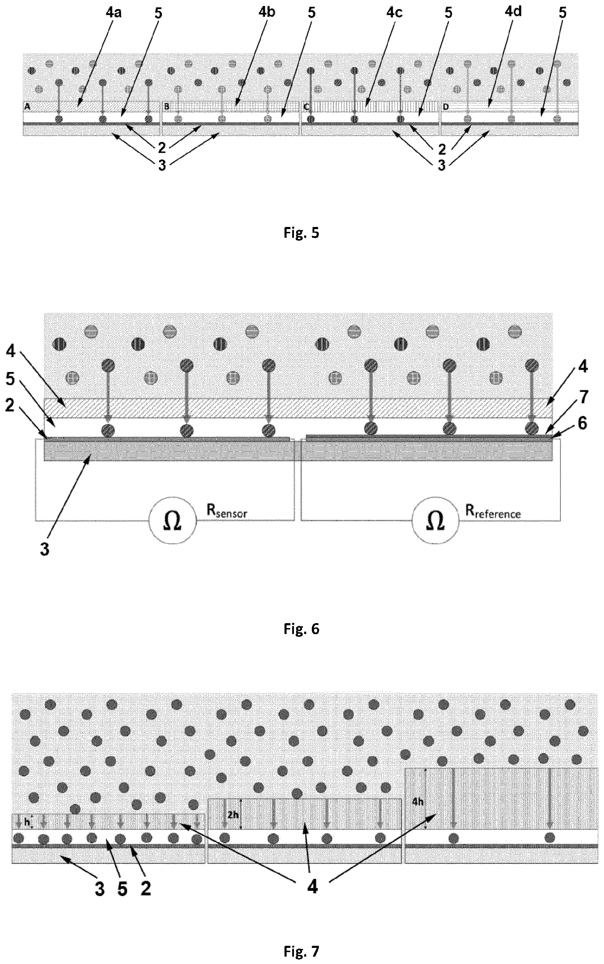

Fig. 5 illustrates a fourth embodiment of the atmospheric corrosion sensor corresponding to the second embodiment which is, however, different as the atmospheric corrosion sensor 1 comprises plurality of atmospheric corrosion sensing structures 2 having the same spatial dimensions. Atmospheric corrosion sensing structures 2 are covered by different gas-selective layers 4 wherein gas-selective layers 4 allow for transfer of different corrosive gases to said atmospheric corrosion sensing structures 2. A gas-selective layer 4a is permeable to gas molecules A (e.g., $SO_2$), a gas-selective layer 4b is permeable to gas molecules B (e.g., $NO_x$), a gas-selective layer 4C is permeable to gas molecules C (e.g., $H_2S$), and a gas-selective layer 4d is permeable to gas molecules D (e.g., gaseous $Cl_2$).

In other embodiments of the invention, corrosion sensing structures 2 can be covered by different gas-selective layers 4 allowing for the transfer of different predefined sets of corrosive gases to said atmospheric corrosion sensing structures 2. In yet another embodiment of the invention, corrosion sensing structures 2 can be covered also by different combination of gas-selective layers 4 allowing for transfer of different corrosive gases or a different predefined set of corrosive gases to said atmospheric corrosion sensing structures 2.

A plurality of such sensing structures, covered by a different gas selective permeable layers designed to transmit only a particular corrosive gas molecules and reduce transmission of other molecules allows to measure the corrosion rate with respect to concentration of different corrosive gases and quantify the corrosivity and composition of the atmosphere.

## Embodiment 5

Fig. 6 illustrates a fifth embodiment of the atmospheric corrosion sensor corresponding to the any previously discussed embodiments further comprising a reference structure 6, where both corrosion sensing structure 2 and reference structure 6 are made of copper film placed on a common substrate (e.g. printed circuit board). Reference structure 6 is of the same spatial dimensions as atmospheric corrosion sensing structure 2. Furthermore, it is covered with nonpermeable protective layer 7 (e.g. a soldermask film) which protects it from corrosion. Reference structure 6 covered with nonpermeable protective layer 7 can be used together with atmospheric corrosion sensing structure 2 to compensate the influence of temperature and other environmental factors on the measurement.

## Embodiment 6

Fig. 7 illustrates a sixth embodiment of the atmospheric corrosion sensor corresponding embodiment 1. The atmospheric corrosion sensor according to this embodiment comprises plurality of atmospheric corrosion sensing structures 2 having the same spatial dimensions. As shown in Fig. 7 each corrosion sensing structures 2 is covered by a gas permeable layer 4 of different thickness. The corrosion rate depends on the concentration of the corrosive gas molecules that reach the corrosion sensing structures 2. The corrosion sensing structures 2 covered by the thinnest layer will be broken as the first one. On the other hand, the film covered by the thickest layer will be broken as the last one. Therefore, the corrosion rate can be estimated based on the measurement of the time needed to break the electrical continuity of subsequent corrosion sensing structures 2.

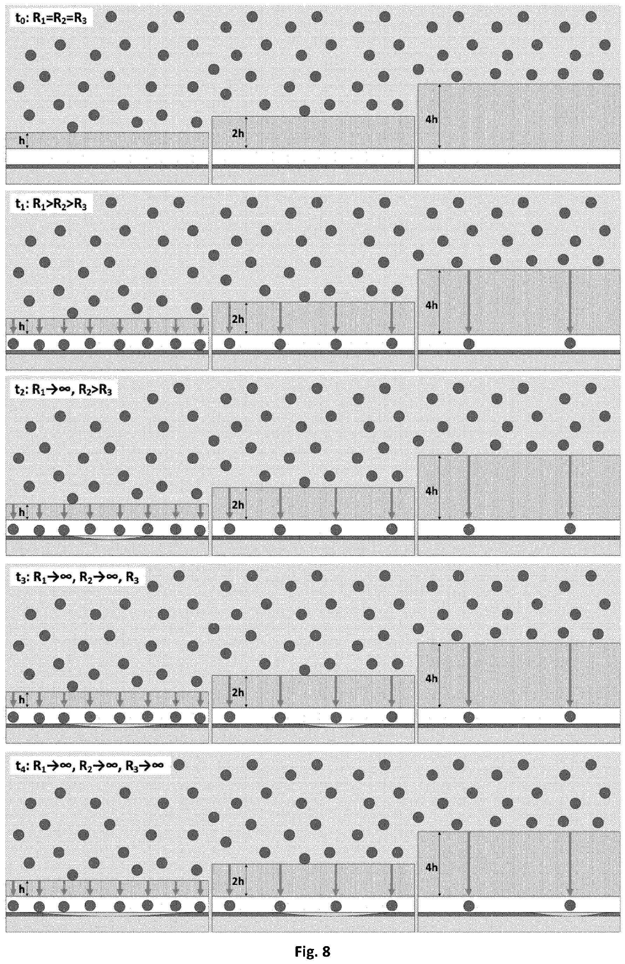

The effect of atmospheric corrosion in discrete time points on three the same sensing films covered with non-corrodible, gas permeable layers of different thickness is shown in Fig. 8.

Initially, all the corrosion sensing structures 2 have the same electrical resistance ($R_1=R_2=R_3$). Once the corrosive molecules start to migrate from the atmosphere, through the gas permeable layers, to the surface of the corrosion sensing structures 2, the corrosion occurs and the electrical resistance of each corrosion sensing structure 2 starts to increase. The thicker the gas permeable layer, the lower the corrosion rate, so the lower the resistance increase. If the corrosion lasts long enough, the electrical continuity of each corrosion sensing structures 2 will be broken at a certain point in time, depending on the thickness of the gas permeable layer. In other words, the corrosion sensing structure 2 will appear as an open-circuit, easy to detect by a digital input of a logic device. Given the gas permeable layers thickness, the chemical composition of corrosion sensing structures 2 and the time needed to break corrosion sensing structure 2 it is possible to estimate the corrosivity of the atmosphere. A plurality of such corrosion sensing structure 2 can be used to monitor the atmospheric corrosion progress.

## Embodiment 7

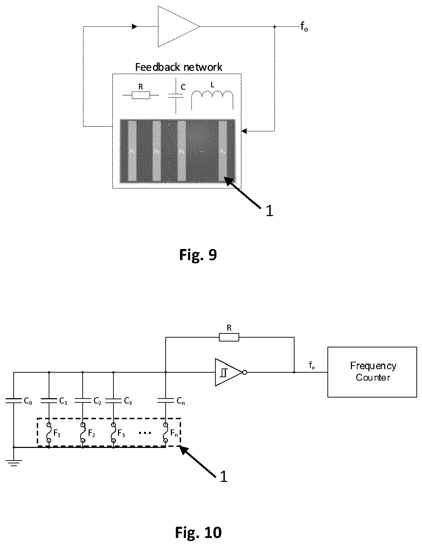

An oscillator circuit for corrosion detection comprising plurality atmospheric corrosion sensors 1 having corrosion sensing structure or an atmospheric corrosion sensor 1 comprising plurality of corrosion sensing structures 2 as described in any of the embodiments 1-6. Corrosion sensing structures 2 are connected to a plurality of reactive components of the oscillator circuit (R - resistors, C - capacitors, $L$ - inductors) and forms part of the oscillator feedback network (Fig. 9).

Corrosion sensing structures 2 of said atmospheric corrosion sensor 1 are covered by permeable layers and exposed to corrosive atmosphere and disconnect reactive components from said oscillator circuit. Once their electrical continuity is broken due to corrosion the output frequency $f_o$ of the oscillator changes because the topology of its feedback network changes as well.

Initially, all corrosion sensing structures 2 provide an electrical continuity so they can be represented by short circuits. Due to corrosion process, the structures are degraded until their continuity is broken. In this case they can be represented by open circuits. The corrosion sensing structures have the same spatial dimensions but are covered with different permeable layers, so the time needed to break each structure due to corrosion is different.

Two implementations of an oscillator comprising atmospheric corrosion sensors 1, wherein corrosion sensing structures 2 are represented by fuse symbols F on Fig. 9-13, are proposed.

First is a well-known RC oscillator based on a single Schmitt trigger inverter gate, shown in Fig. 10. It uses a single resistor R and multiple capacitors in the feedback network. Capacitor $C_0$ is permanently connected to the inverter input, meanwhile capacitors $C_1, C_2, C_3, ..., C_n$ will be disconnected when the electrical continuity of corrosion sensing structures $F_1, F_2, F_3, ..., F_n$ breaks.

The output frequency $f_o$ of the oscillator can be calculated by using the following formulas [1], [2]:

$$f_o = \frac{1}{RC \ln\left[\left(\frac{V_{cc}-V_{T-}}{V_{cc}-V_{T+}}\right)\left(\frac{V_{T+}}{V_{T-}}\right)\right]} \quad [1]$$

$$C = C_0 + \delta_1 C_1 + \delta_2 C_2 + \delta_3 C_3 + \cdots + \delta_n C_n \quad [2]$$

$$\delta_i = \begin{cases} 1, if\ F_i\ is\ shorted \\ 0, if\ F_i\ is\ broken \end{cases}$$

where: $V_{cc}$ is the supply voltage for the Schmitt inverter, $V_{T-}$ and $V_{T+}$ are negative-going and positive-going input threshold voltages

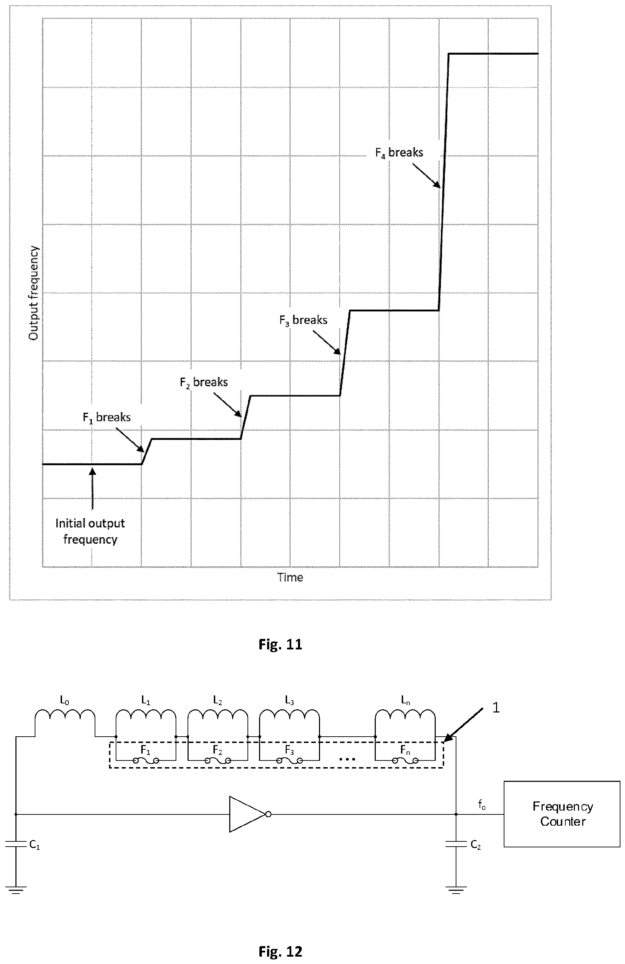

Since the output frequency $f_o$ is inversely proportional to the feedback capacitance, it will increase stepwise once the fuses start to disconnect the capacitors. An example output frequency change in time due to corrosion of sensing structures is depicted in Fig. 11. It is assumed that capacitors $C_0$, ..., $C_n$ have the same values. The output frequency is as an indicator of the ongoing corrosion and can be measured by a frequency counter, easy to implement in most of the programmable logic devices and microcontrollers used nowadays.

The second implementation is an example of a well-known Colpitts oscillator based on a logic inverter gate, shown in Fig. 12. The feedback network comprises two capacitors, $C_1$ and $C_2$, connected to the input and output of the gate respectively. The path between the input and output of the gate is closed by multiple inductors connected in series. The inductor $L_0$ is connected permanently, meanwhile inductors $L_1$, $L_2$, $L_3$, ..., $L_n$ are shorted by fuses $F_1$, $F_2$, $F_3$, ..., $F_n$. Once the fuse $F_i$ breaks, the inductance of $L_i$ is added to the total feedback inductance of the oscillator.

The output frequency $f_o$ of the oscillator can be calculated by using the following formulas [3], [4]:

$$f_o = \frac{1}{2\pi\sqrt{L\left(\frac{C_1 C_2}{C_1+C_2}\right)}} \quad [3]$$

$$L = L_0 + \delta_1 L_1 + \delta_2 L_2 + \delta_3 L_3 + \cdots + \delta_n L_n \quad [4]$$

$$\delta_i = \begin{cases} 0, if\ F_i\ is\ shorted \\ 1, if\ F_i\ is\ broken \end{cases}$$

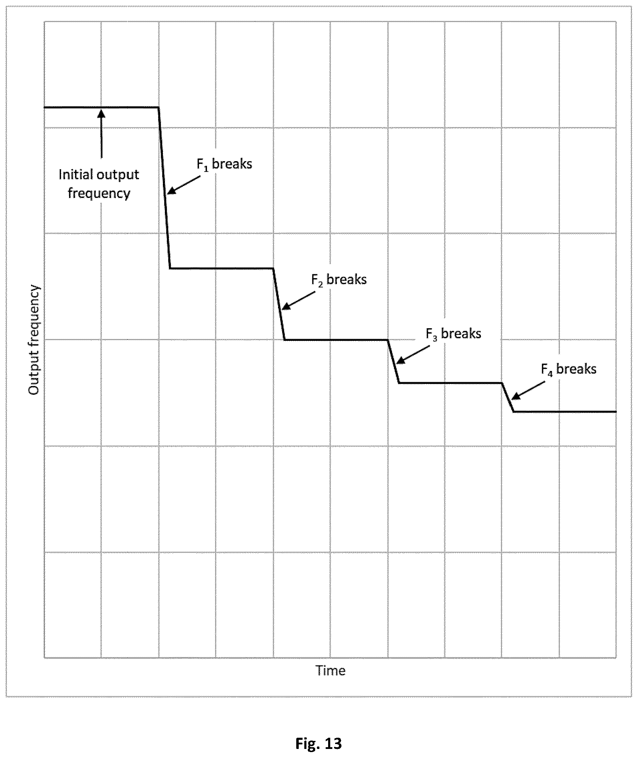

Since the output frequency is inversely proportional to the square root of the feedback inductance, it will decrease stepwise once the fuses $Fn$ start to break and the inductances start to add. An example output frequency change in time due to corrosion of sensing structures is depicted in Fig. 13. It is assumed that $L_0$, ..., $L_n$ have the same values. Same as in the previous implementation example, the output frequency $fo$ is as an indicator of the ongoing corrosion and can be measured by a frequency counter, easy to implement in most of the programmable logic devices and microcontrollers used nowadays.

**Embodiment 8**

An oscillator circuit for corrosion detection with an integrated circuit of LM555 timer comprising plurality atmospheric corrosion sensors 1 having corrosion sensing structure or an atmospheric corrosion sensor 1 comprising plurality of corrosion sensing structures as described in any of the embodiments 1-6.

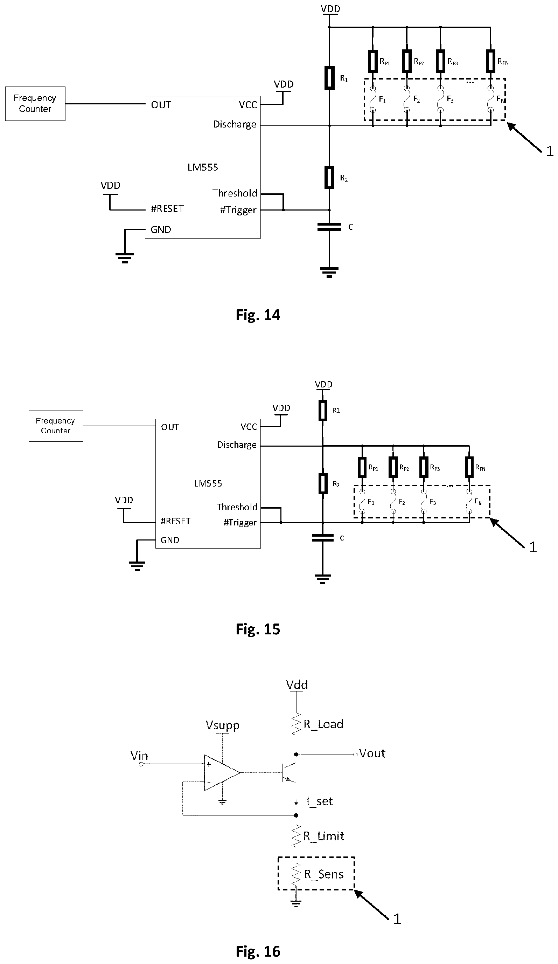

Two implementations of an oscillator with an integrated circuit of LM555 timer comprising at least one atmospheric corrosion sensor 1, wherein corrosion sensing structures 2 are represented by fuse symbols $F_1...F_N$, on Fig. 14-15, are proposed.

According to first implementation presented in Fig. 14, arrangements of fuses $F_1...F_N$, (corrosion sensing structures 2) connected in series with a plurality of resistors $R_{P1}$-$R_{PN}$ are connected in-parallel with resistor R1.

The equivalent resistance is given by the following formula [5]:

$$\frac{1}{R_1'} = \frac{1}{R_1} + \delta_1 \frac{1}{R_{P1}} + \delta_2 \frac{1}{R_{P2}} + \delta_3 \frac{1}{R_{P3}} + \cdots + \delta_N \frac{1}{R_{PN}} \quad [5]$$

$$\delta_i = \begin{cases} 1, if\ F_i\ is\ shorted \\ 0, if\ F_i\ is\ broken \end{cases}$$

The output frequency $f_o$ of the oscillator can be calculated as follows [6]:

$$f_o = \frac{1.44}{(R_1' + 2R_2)C} \qquad [6]$$

It can be seen, that the output frequency $f_o$, which is inversely proportional to the equivalent resistance $R_1'$, will be decreasing stepwise with the progress of corrosion.

According to second implementation of embodiment 8 presented in Fig. 15, arrangements of fuses $F_1...F_N$, (corrosion sensing structures 2) connected in series with resistors $R_{P1}...R_{PN}$ are connected in-parallel with resistor $R_2$. The equivalent resistance is given by the following formula [7]:

$$\frac{1}{R_2'} = \frac{1}{R_2} + \delta_1 \frac{1}{R_{P1}} + \delta_2 \frac{1}{R_{P2}} + \delta_3 \frac{1}{R_{P3}} + \cdots + \delta_N \frac{1}{R_{PN}} \qquad [7]$$

$$\delta_i = \begin{cases} 1, if\ F_i\ is\ shorted \\ 0, if\ F_i\ is\ broken \end{cases}$$

The output frequency $f_o$ of the oscillator can be calculated as follows [8]:

$$f_o = \frac{1.44}{(R_1 + 2R_2')C} \qquad [8]$$

It can be seen, that the output frequency $f_o$, which is inversely proportional to the equivalent resistance $R_2'$, will be decreasing stepwise with the progress of corrosion.

Embodiment 9

An electric circuit of current source comprising a sensing element $R\_sens$ in the form of an atmospheric corrosion sensor 1 comprising plurality of corrosion sensing structures 2 as described in any of the embodiments 1-6.

The corrosion sensing structures 2 of the sensing element $R\_sens$ controls the current $I\_set$ of the current source. The resistance of corrosive element $R\_sens$ is used to set the value of the current source $I\_set$, thus the current at the output of the source changes together with the resistance of the sensing element $R\_sens$. The changing resistance is reflected in a changes of output current of the current source controlled by the corrosion sensing structure 2.

Additional resistor $R\_limit$ can be used in series with the sensing element $R\_sens$ so that the current can be limited to reasonable values even if the resistance of the sensing element $R\_sens$ is very small.

Two implementations of such a circuit are proposed.

First implementation presented in Fig. 16 revels a circuit with fixed supply *Vdd* and fixed value of the control voltage *Vin*.

The output current value $I\_set$ can be calculated by the following formula [9]:

$$I\_set = \frac{Vin}{R_{sens} + R\_limit} \qquad [9]$$

It is possible as well to calculate the voltage output *Vout* on a load resistor $R\_load$ by the following formula [10]:

$$Vout = Vdd - \frac{Vin}{R_{sens} + R\_limit} * R\_load \qquad [10]$$

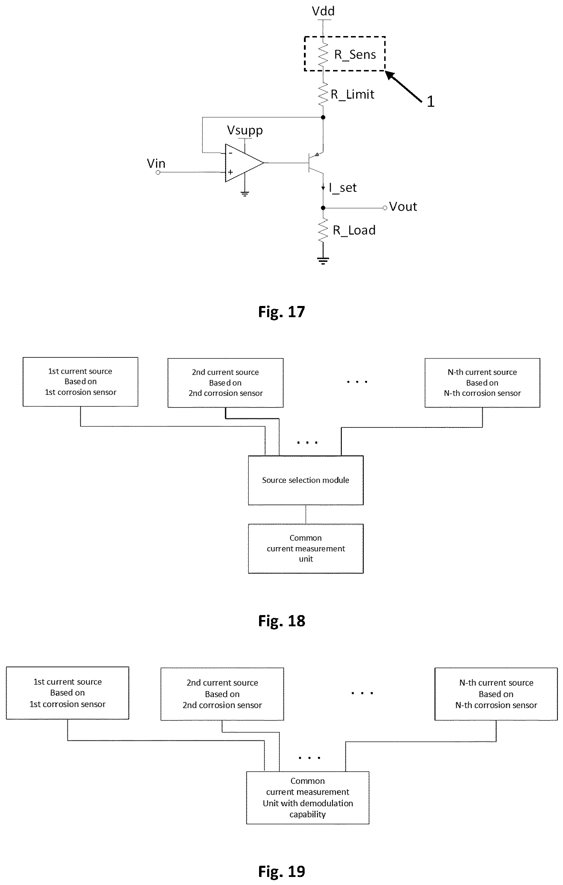

Another example of implementation is presented in Fig. 17.

The output current value $I\_set$ can be calculated by the following formula [11]:

$$I\_set = \frac{Vdd - Vin}{R_{sens} + R\_limit} \qquad [11]$$

It is possible as well to calculate the voltage output *Vout* on a load resistor *R_load* by the following formula [12]:

$$\text{Vout} = \frac{Vdd - Vin}{R_{sens} + R\_limit} * R\_load \qquad [12]$$

What is more, as the output signal of the current source is not affected by the length of the wires, it is possible to combine many of such electric circuits of the current source comprising a sensing element *R_sens* in the form of atmospheric corrosion sensor 1 with a single measurement unit which is able to measure the current produced by a single source (for example, a measurement card which accepts signal range 4-20 mA). This way it is possible to build a measurement system with distributed sensors and a common measurement unit, as it is shown in Fig. 18.

Furthermore, it is possible to connect such electric circuits of the current source comprising a sensing element *R_sens* in the form of atmospheric corrosion sensor 1, together, and apply modulation to every *Vin* signal with different carrier frequency. In this case, the measurement unit can demodulate and extract corrosion data from combined signals so there is no need to use the source selection module, as it is shown in Fig. 19.

## Embodiment 10

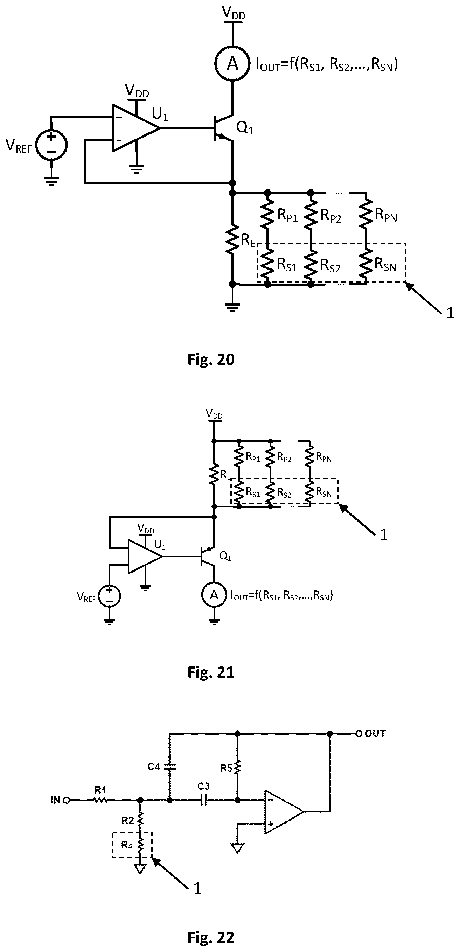

A present embodiment relates to a current sink circuit comprising at least one atmospheric corrosion sensor 1 according to any of the embodiments 1-6. Corrosion sensing structures 2 of atmospheric corrosion sensor 1 are represented on Fig. 20 by resistors $R_{S1}...R_{SN}$. An emitter resistor $R_E$ is connected in parallel with arrangements of corrosion sensing structures 2 connected in series with fixed resistors $R_{P1}...R_{PN}$.

In this case corrosion sensing structures 2 of the atmospheric corrosion sensor 1 are intended to act as electronic fuses representing very low resistance in the initial state and very high resistance after being corroded.

The equivalent resistance of the network can be expressed by the following formula [13]:

$$\frac{1}{R_E'} = \frac{1}{R_E} + \frac{1}{R_{P1} + R_{S1}} + \frac{1}{R_{P2} + R_{S2}} + \cdots + \frac{1}{R_{PN} + R_{SN}} \qquad [13]$$

The output current $I_{OUT}$ can be calculated using the following formula [14]:

$$I_{OUT} = \frac{V_{REF}}{R_E'} \qquad [14]$$

The output current, which is inversely proportional to the equivalent resistance $R_E'$, will be decreasing stepwise with the progress of corrosion.

## Embodiment 11

A present embodiment relates to a current source circuit comprising at least one atmospheric corrosion sensor 1 according to any of the embodiments 1-6. Corrosion sensing structures 2 of atmospheric corrosion sensor 1 are represented on Fig. 21 by resistors $R_{S1}...R_{SN}$. An emitter resistor $R_E$ is connected in parallel with arrangements of corrosion sensing structures 2 connected in series with fixed resistors $R_{P1}...R_{PN}$.

In this case corrosion sensing structures 2 of the atmospheric corrosion sensor 1 are intended to act as electronic fuses representing very low resistance in the initial state and very high resistance after being corroded.

The equivalent resistance of the network can be expressed by the following formula [15]:

$$\frac{1}{R_E'} = \frac{1}{R_E} + \frac{1}{R_{P1} + R_{S1}} + \frac{1}{R_{P2} + R_{S2}} + \cdots + \frac{1}{R_{PN} + R_{SN}} \qquad [15]$$

The output current $I_{OUT}$ can be calculated using the following formula [16]:

$$I_{OUT} = \frac{V_{DD} - V_{REF}}{R_E'} \qquad [16]$$

wherein - VDD - supply voltage, Vref - reference voltage

The output current, which is inversely proportional to the equivalent resistance $R_E$', will be decreasing stepwise with the progress of corrosion.

**Embodiment 12**

A present embodiment relates to a narrow band-pass filter comprising atmospheric corrosion sensor 1 according to any of embodiments 1-6. Corrosion sensing structure 2 is used to control center frequency of the narrow band-pass filter. Resistance of the corrosion sensing structure 2 is used to set the center frequency of the narrow band-pass filter. Thus, the center frequency of the filter changes due to the changes of the resistance of the atmospheric corrosion sensor 1.

Fig. 22 presents a multiple feedback narrow band-pass filter. Corrosion sensing structure 2 of the atmospheric corrosion sensor 1, denoted on Fig. 22 as Rs, is connected in series with R2.

The center frequency is given by the following formula [17]:

$$f_0 = \frac{1}{2*\pi} * \sqrt{\frac{1}{R5*C3*C4} * \left(\frac{1}{R1} + \frac{1}{R2+Rs}\right)} \qquad [17]$$

The sensing element could be as well connected in series with R1 or R5, and then in the equation above should be changed properly.

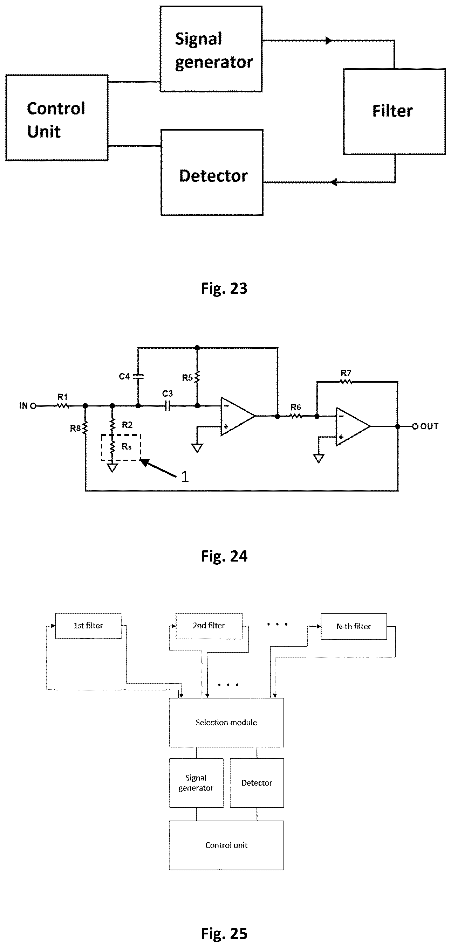

To check the center frequency of the narrow band-pass filter controlled by the corrosion sensor 1, signals of various frequencies must be generated and passed through the filter. The control unit which knows the transmitted frequency and amplitude of the signal received by the detector, might calculate the change of the sensing element resistance and basis on that provide information about corrosion progress. Fig. 23 presents a measurement circuit for the filter based on corrosion sensor 1.

Single stage filter like the one presented in Fig.22 usually have quality factor below 20, so its pass-band might be too wide. To get even narrower characteristic of the filter, it is possible to modify it by adding a second operational amplifier, as shown on Fig. 24, which enables increasing quality factor (Q) even to values of few hundreds, thus enabling much narrower bandwidth.

Furthermore, it is also possible to combine many of sensors based on filter with a single measurement unit which is able to measure the frequency response of a single filter. This way it is possible to build a measurement system with distributed sensors and a common measurement unit, as it is shown in Fig. 25.

**Embodiment 13**

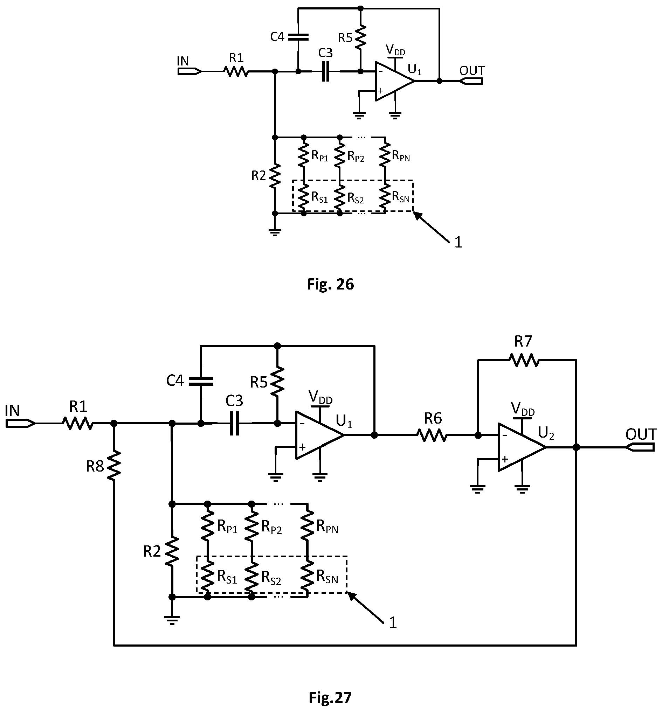

A present embodiment relates to a narrow band-pass filter comprising at least one atmospheric corrosion sensor 1 according to any of the embodiments 1-6. Corrosion sensing structures 2 of atmospheric corrosion sensor 1 are represented on Fig. 26 by resistors $R_{S1}...R_{SN}$. A narrow band-pass filter circuit comprises a resistor $R_2$ connected in parallel with arrangements of corrosion sensing structures 2 connected in series with fixed resistors $R_{P1}...R_{PN}$.

In this case the corrosion sensing structures are intended to act as electronic fuses representing very low resistance in the initial state and very high resistance after being corroded.

The equivalent resistance of the network can be expressed by the following formula [18]:

$$\frac{1}{R_2'} = \frac{1}{R_2} + \frac{1}{R_{P1}+R_{S1}} + \frac{1}{R_{P2}+R_{S2}} + \cdots + \frac{1}{R_{PN}+R_{SN}} \quad [18]$$

The center frequency *fo* of the filter is given by the following equation [19]:

$$f_0 = \frac{1}{2\pi\sqrt{(R_1||R_2')R_5C_3C_4}} \qquad [19]$$

The center frequency *fo,* which depends upon $R_2$', will be decreasing stepwise with the progress of corrosion.

Similar corrosion sensing structures network can also be incorporated in a high-quality factor narrow band-pass filter circuit, in order to obtain narrower frequency response, as shown in Fig. 27. The center frequency of the filter depends upon the equivalent resistance of the corrosion sensing structures network and will change stepwise with the progress of corrosion.

**Claims**

1. An atmospheric corrosion sensor (1) for detecting corrosion of electrical equipment due to corrosive gas comprising at least one atmospheric corrosion sensing structure (2) placed on at least one insulated corrosion sensor substrate (3) **characterized in that** said atmospheric corrosion sensor (1) comprises at least one gas permeable layer (4) placed on the corrosion sensing structure (2) wherein said gas permeable layer (4) allows for transferring the molecules of corrosive gases present in the atmosphere to the surface of the sensing structure (2), opposite to insulated corrosion sensor substrate (3), causing it to corrode.

2. The atmospheric corrosion sensor (1) according to claim 1 **characterized in that** the gas permeable layer (4) is a gas-selective layer allowing for transfer of a single corrosive gas or a predefined set of corrosive gases to said atmospheric corrosion sensing structure (2).

3. The atmospheric corrosion sensor (1) according to claim 2 **characterized in that** said atmospheric corrosion sensor (1) comprises at least two gas-selective layers (4) located on top of each other wherein the combination of these gas-selective layers (4) allows for transfer of a single corrosive gas or a predefined set of corrosive gases to said atmospheric corrosion sensing structure (2).

4. The atmospheric corrosion sensor (1) according to claim 2 or 3 **characterized in that** said atmospheric corrosion sensor (1) comprises at least two atmospheric corrosion sensing structures (2), preferably of the same spatial dimensions, wherein these atmospheric corrosion sensing structures (2) are covered by different gas-selective layers (4) or different combination of gas-selective layers (4), wherein gas-selective layers (4) or combinations of gas-selective layers (4) allow for transfer of different corrosive gases or a different predefined set of corrosive gases to said atmospheric corrosion sensing structures (2).

5. The atmospheric corrosion sensor (1) according to any of the claim 1 to 3 **characterized in that** said atmospheric corrosion sensor (1) comprises at least two atmospheric corrosion sensing structures (2) of the same spatial dimensions, wherein said sensing structures (2) are covered by gas permeable layers (4), of the same type, having different thickness.

6. The atmospheric corrosion sensor (1) according to any of the preceding claims **characterized in that** said atmospheric corrosion sensor (1) comprises at least one reference structure (6) covered with nonpermeable protective layer (7), wherein reference structure (6) is made of the same material as atmospheric corrosion sensing structure (2) and have the same spatial dimensions.

7. The atmospheric corrosion sensor (1) according to any of the preceding claims **characterized in that** it comprises gutter layer (5) located between the corrosion sensing structure (2) and the gas permeable layer (4).

8. The atmospheric corrosion sensor according to any of the preceding claims **characterized in that** corrosion sensing structure (2) is made of corrodible metal or metal alloy, in particular copper, aluminum, iron, zinc, nickel, silver, steel, brass.

9. The atmospheric corrosion sensor according to any of the preceding claims **characterized in that** corrosion sensing structure (2) is made of metal or metals alloy film.

10. Set of atmospheric corrosion sensors (1) according to any of the claims 1 to 9.

11. An electrical equipment for corrosion detection comprising at least one of the atmospheric corrosion sensors (1) according to any the claims 1 to 9 or at least one set of atmospheric corrosion sensors (1) according to claim 10.

**Fig. 1**

**Fig. 2**

Gas Molecule D

Gas Molecule A

Corrosive
Atmosphere

Gas Molecule C

1

Gas Molecule B

4

5

2

3

**Fig. 3**

Gas Molecule A

Gas Molecule D

Gas Molecule C

1

4a

4b

Gas Molecule B

5

2

3

**Fig. 4**

Fig. 5

Fig. 6

Fig. 7

EP 4 545 939 A1

Fig. 8

17

Fig. 9

Fig. 10

**Fig. 11**

**Fig. 12**

**Fig. 13**

Fig. 14

Fig. 15

Fig. 16

Vdd

R_Sens

R_Limit

1

Vsupp

Vin

−
+

I_set

Vout

R_Load

**Fig. 17**

| 1st current source<br>Based on<br>1st corrosion sensor | 2nd current source<br>Based on<br>2nd corrosion sensor | . . . | N-th current source<br>Based on<br>N-th corrosion sensor |

. . .

Source selection module

Common
current measurement
unit

**Fig. 18**

| 1st current source<br>Based on<br>1st corrosion sensor | 2nd current source<br>Based on<br>2nd corrosion sensor | . . . | N-th current source<br>Based on<br>N-th corrosion sensor |

. . .

Common
current measurement
Unit with demodulation
capability

**Fig. 19**

Fig. 20

Fig. 21

Fig. 22

**Fig. 23**

**Fig. 24**

**Fig. 25**

**Fig. 26**

**Fig.27**

Europäisches
Patentamt

European
Patent Office

Office européen
des brevets

# EUROPEAN SEARCH REPORT

**Application Number**

EP 23 20 5862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H10 300699 A (MITSUBISHI ELECTRIC CORP) 13 November 1998 (1998-11-13) * paragraph [0010] – paragraph [0021]; claim 1 * | 1-11 | INV. G01N17/00 G01N17/02 G01N27/26 |
| X | WO 2020/208931 A1 (KOA CORP [JP]) 15 October 2020 (2020-10-15) * paragraphs [0002], [0005], [0018] – [0021] * | 1-11 | |
| X | JP 2005 214766 A (MITSUBISHI ELECTRIC CORP) 11 August 2005 (2005-08-11) * paragraphs [0001], [0010] – [0016] * | 1-11 | |
| A | WAN SHAN ET AL: "Comparative investigation on copper atmospheric corrosion by electrochemical impedance and electrical resistance sensors", TRANSACTIONS OF NONFERROUS METALS SOCIETY OF CHINA, ELSEVIER, AMSTERDAM, NL, vol. 31, no. 10, 1 October 2021 (2021-10-01), pages 3024-3038, XP086856885, ISSN: 1003-6326, DOI: 10.1016/S1003-6326(21)65712-6 [retrieved on 2021-11-09] * section 2.2; figure 1 * | 1-11 | TECHNICAL FIELDS SEARCHED (IPC) G01N |
| A | WO 2018/092264 A1 (TOKYO ELECTRIC POWER CO HOLDINGS INC [JP]) 24 May 2018 (2018-05-24) * paragraphs [0014] – [0020]; figures 1, 2 * | 1-11 | |

The present search report has been drawn up for all claims

| Place of search | Date of completion of the search | Examiner |
|---|---|---|
| The Hague | 8 April 2024 | Martin, Hazel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 545 939 A1**

## ANNEX TO THE EUROPEAN SEARCH REPORT
## ON EUROPEAN PATENT APPLICATION NO.

**EP 23 20 5862**

This annex lists the patent family members relating to the patent documents cited in the above-mentioned European search report.
The members are as contained in the European Patent Office EDP file on
The European Patent Office is in no way liable for these particulars which are merely given for the purpose of information.

**08-04-2024**

| Patent document cited in search report | | Publication date | Patent family member(s) | | Publication date |
|---|---|---|---|---|---|
| JP H10300699 | A | 13-11-1998 | NONE | | |
| WO 2020208931 | A1 | 15-10-2020 | JP | 7197425 B2 | 27-12-2022 |
| | | | JP | 2020173200 A | 22-10-2020 |
| | | | WO | 2020208931 A1 | 15-10-2020 |
| JP 2005214766 | A | 11-08-2005 | NONE | | |
| WO 2018092264 | A1 | 24-05-2018 | CN | 109983329 A | 05-07-2019 |
| | | | EP | 3543685 A1 | 25-09-2019 |
| | | | JP | 6828750 B2 | 10-02-2021 |
| | | | JP | WO2018092264 A1 | 10-10-2019 |
| | | | PH | 12019501092 A1 | 19-08-2019 |
| | | | WO | 2018092264 A1 | 24-05-2018 |

EPO FORM P0459

For more details about this annex : see Official Journal of the European Patent Office, No. 12/82

**REFERENCES CITED IN THE DESCRIPTION**

**Patent documents cited in the description**

- US 8723534 B2
- US 8390306 B2
- US 20230134944 A1

**Non-patent literature cited in the description**

- **ALEXANDER MUNDSTOCK** ; **ARMIN FELDHOFF** ; **ALEXANDER KNEBEL** ; **JIAHUI GU** ; **HONG MENG** ; **JÜRGEN CARO**. Covalent Organic Framework-Covalent Organic Framework Bilayer Membranes for Highly Selective Gas Separation Hongwei Fan. *Journal of the American Chemical Society*, 2018, vol. 140 (32), 10094-10098